# EUROPEAN PATENT APPLICATION

(11) **EP 4 641 060 A1**
(43) Date of publication of application: **29.10.2025**
(21) Application number: 23906606.1
(22) Date of filing: 28.11.2023
(51) Int. Cl.: F16K 31/04, F16K 5/04, F16K 11/085

(54) **VALVE CONTROL DEVICE**

(30) Priority: 23.12.2022 JP 2022206298
(71) Applicant: AISIN CORPORATION, Kariya-shi, Aichi 448-8650 (JP)
(72) Inventor: OIWA Toshiyuki, Kariya-shi, Aichi 448-8650 (JP); UEDA Masaki, Kariya-shi, Aichi 448-8650 (JP); FUJIOKA Hiroyuki, Kariya-shi, Aichi 448-8650 (JP); GENG Jinqun, Kariya-shi, Aichi 448-8650 (JP)
(74) Representative: Winter, Brandl - Partnerschaft mbB
(86) International application number: PCT/JP2023/042439
(87) International publication number: WO 2024/135237

(57) **Abstract**

A valve control device includes a valve apparatus that includes a valve body including an input shaft made of resin and an actuator that transmits a rotational force from an output shaft to the input shaft, and a control unit that controls the actuator. The control unit includes a target rotation angle acquisition unit, a twist amount acquisition unit that acquires twist amount information on the input shaft with respect to the output shaft when rotated by the actuator, and a correction unit that sets a corrected target rotation angle corrected with the twist amount information, based on the target rotation angle acquired by the target rotation angle acquisition unit, and rotates the output shaft to a rotation angle indicated by the corrected target rotation angle set by the correction unit.

## Description

### TECHNICAL FIELD

The present disclosure relates to a valve control device.

### BACKGROUND ART

Patent Literature 1 describes a valve apparatus in which a rotor is rotatably accommodated in a housing, and an electric motor that drives and rotates the rotor is provided outside the housing. The valve apparatus described in Patent Literature 1 includes a main communication port and a plurality of secondary communication ports formed in the housing, and a main opening and a plurality of secondary openings formed in the rotor.

The valve apparatus is configured such that the rotor is rotatably fitted in the housing, and a coolant supplied from the main communication port of the housing to the main opening of the rotor is passed from the secondary openings of the rotor to the secondary communication ports of the housing.

### CITATIONS LIST

### PATENT LITERATURE

Patent Literature 1: JP 2020-197305 A

### SUMMARY OF INVENTION

### TECHNICAL PROBLEMS

The valve apparatus described in Patent Literature 1 is configured such that setting the rotation angle of the rotor allows not only the selection of a flow path of the coolant to flow through the plurality of secondary openings and the plurality of secondary communication ports, but also the control of the flow rate of the coolant.

In the valve apparatus like this, the amount of the coolant is set by the amount of overlap between the secondary openings and the secondary communication ports. Therefore, it is required to control the rotation angle of the rotor with high accuracy to control the flow rate with high accuracy.

However, for example, if the entire rotor is formed of resin, there may occur a phenomenon in which the rotational driving force of the motor causes an input shaft made of resin to be twisted by rotational torque.

If the phenomenon in which the input shaft is twisted is caused in this manner, the rotor may not be able to reach a target rotation angle even when the motor is rotated to a target rotation angle. There is also a concern that even after the motor has stopped, rotational torque in the direction of untwisting the input shaft may act in the direction of oppositely rotating the output shaft of the motor.

For these reasons, there is a demand for a valve control device capable of setting a valve body to a target rotation angle with high accuracy by the control of an actuator even when an input shaft of the valve body is made of resin.

### SOLUTIONS TO PROBLEMS

A characteristic configuration of a valve control device according to the present disclosure includes a valve apparatus including a valve body including an input shaft made of resin, the valve body being rotatable, an output shaft that transmits a rotational force to the input shaft, and an actuator that controls the flow rate of a fluid by rotation of the output shaft, and a control unit that controls the operation of the actuator. The control unit includes a target rotation angle acquisition unit that acquires a target rotation angle of the valve body, a twist amount acquisition unit that acquires twist amount information indicating the amount of twist of the input shaft with respect to the output shaft caused when the valve body is rotated by the actuator, and a correction unit that sets a corrected target rotation angle corrected with the twist amount information acquired by the twist amount acquisition unit, based on the target rotation angle acquired by the target rotation angle acquisition unit. The control unit controls the actuator to rotate the output shaft to a rotation angle indicated by the corrected target rotation angle set by the correction unit.

According to this configuration, when the valve body is rotated by the driving force of the actuator, the target rotation angle is acquired by the target rotation angle acquisition unit, the twist amount information is acquired by the twist amount acquisition unit, the correction unit sets the corrected target rotation angle by correcting the target rotation angle based on the twist amount information, and control to rotate the output shaft to the rotation angle indicated by the set corrected target rotation angle is performed.

That is, the input shaft made of resin is twisted with the rotation of the output shaft of the actuator, so that even when the output shaft has reached the target rotation angle, the input shaft has not reached the target rotation angle. For this reason, the target rotation angle is corrected based on the twist amount information to set the corrected target rotation angle. Then, by performing control to rotate the output shaft to the corrected target rotation angle, the output shaft rotates in the opposite direction by a twisting force acting on the input shaft after the actuator has stopped, and the rotation angle of the input shaft can be set to the target rotation angle. Thus, the valve control device is configured to set the valve body to the target rotation angle with high accuracy by the control of the actuator even when the input shaft of the valve body is made of resin.

### BRIEF DESCRIPTION OF DRAWINGS

FIG. 1 is a longitudinal sectional view of a valve apparatus in a valve control device.
FIG. 2 is a transverse sectional view of the valve apparatus in which a rotor is at a predetermined rotation angle.
FIG. 3 is a transverse sectional view of the valve apparatus when the rotor has rotated from the predetermined rotation angle.
FIG. 4 is a perspective view illustrating part of the rotor, a seal, and a housing in cross section.
FIG. 5 is a graph illustrating the relationship between an output-side rotation angle and an input-side rotation angle with respect to rotation time of an output shaft of an electric motor.
FIG. 6 is a block circuit diagram of the valve control device.
FIG. 7 is a flowchart of flow rate control.

### DESCRIPTION OF EMBODIMENTS

Hereinafter, embodiments of the present disclosure will be described with reference to the drawings.

### [Basic configuration]

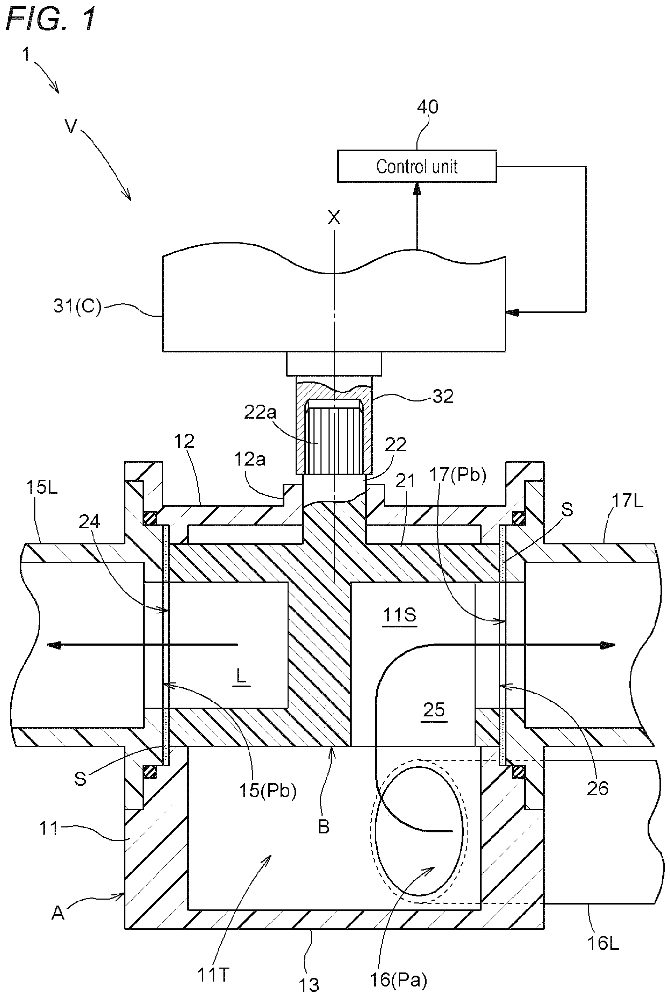

A valve control device 1 includes a valve apparatus V and a control unit 40. As illustrated in FIG. 1, the valve apparatus V is of a rotary valve type and includes a housing A, a rotor B (an example of a valve body and a rotary valve), and an electric motor C (an example of an actuator) that rotates the rotor B.

The valve apparatus V is assumed to control the flow and flow rate of a fluid such as a coolant by setting the rotation angle of the rotor B in a vehicle such as an engine vehicle having an internal combustion engine or an electric vehicle traveling with the driving force of a motor. The fluid may be a coolant such as a long life coolant (LLC), an insulating oil such as a paraffinic oil, or a refrigerant such as a hydrofluorocarbon (HFC) or a hydrofluoroolefin (HFO).

The housing A and the rotor B are formed of resin. As illustrated in FIGS. 1 to 4, the housing A includes a plurality of input ports Pa and a plurality of discharge ports Pb. The rotor B has a cylindrical shape centered around a rotation axis X and includes an internal passage L. In the rotor B, an input shaft 22 coaxial with the rotation axis X is integrally formed with a rotor body 21.

A seal S is disposed at the boundary between the inner periphery of the housing A and the outer periphery of the rotor B. The seal S prevents leakage of the fluid from the internal passage L. Note that the use position of the valve apparatus V is not limited to the position illustrated in FIG. 1. However, for the positional relationships between the parts in the present embodiment, vertical positional relationships or the like are sometimes described with respect to the position illustrated in FIG. 1.

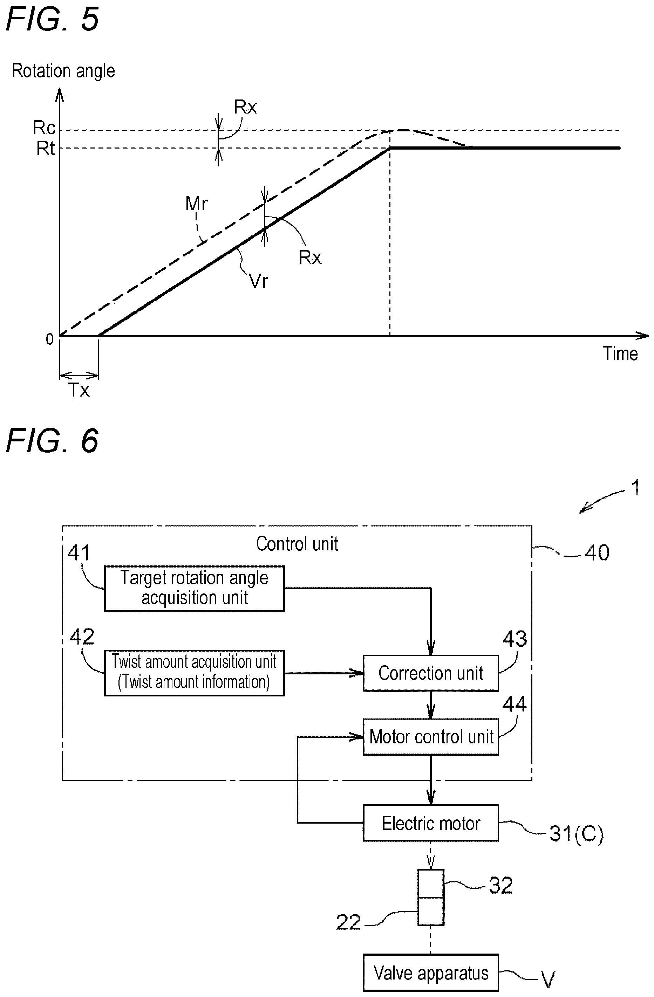

The electric motor C includes an output shaft 32 to be fitted to the input shaft 22 of the rotor B. The electric motor C is controlled by the control unit 40. The control unit 40 sets a target rotation angle Rt of the output shaft 32 (see FIG. 5) according to a control signal from the outside (e.g., an ECU mounted on the vehicle body).

The input shaft 22 of the rotor B is formed of resin. Therefore, when the rotor B is rotated by the driving force of the electric motor C, a phenomenon in which the input shaft 22 is twisted causes an insufficient rotation angle of the input shaft 22 with respect to the rotation angle of the output shaft 32. Consequently, the rotor B decreases in rotation accuracy when set to the target rotation angle Rt.

For this reason, the control unit 40 performs control to set the rotor B to the target rotation angle Rt (see FIG. 5) with high accuracy. Details of this control mode will be described below.

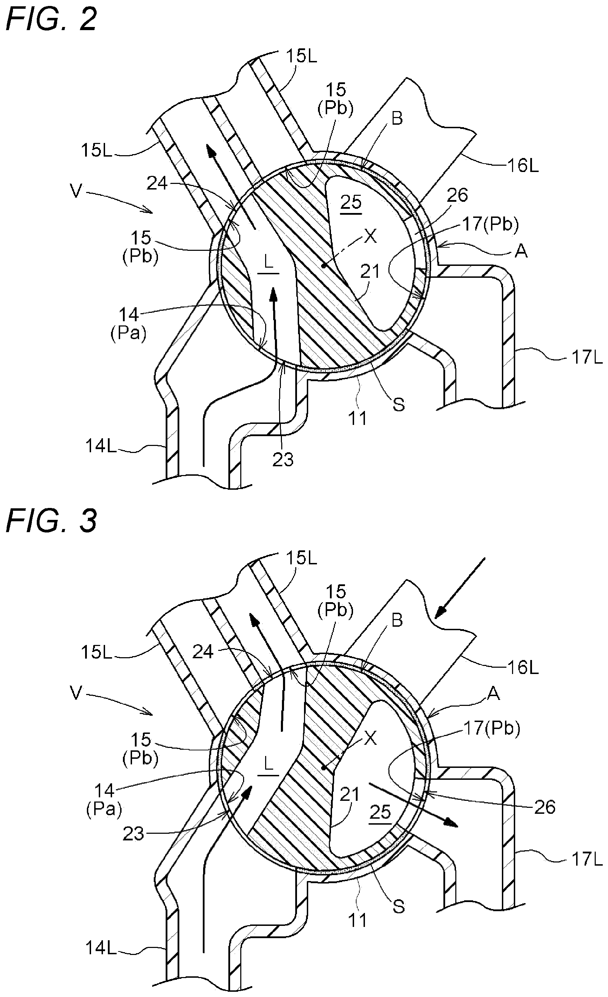

Note that the valve apparatus V is not limited to the configuration illustrated in FIGS. 1 to 4, and may be configured to branch the fluid supplied from one flow passage into three or more flow passages, or configured to perform only flow rate control on the fluid in one flow passage. The flow directions of the fluid may be set opposite to those in the configuration illustrated in FIGS. 2 and 3.

### [Housing]

As illustrated in FIGS. 1 to 4, the housing A includes a housing body 11 in which a cylindrical rotor housing space 11S is formed, and a lid-shaped body 12 that closes the rotor housing space 11S. The lid-shaped body 12 has an input shaft support portion 12a formed to support the input shaft 22 of the rotor B.

The housing body 11 includes a bottom wall 13. In the housing A, a bottom passage 11T is formed between the bottom of the rotor B and the bottom wall 13 with the rotor B accommodated in the rotor housing space 11S.

In the outer periphery of the housing body 11, a long hole-shaped main inlet port 14 extending in the circumferential direction of the housing A as one of the input ports Pa, and a pair of main outlet ports 15 as two of the discharge ports Pb are formed.

Further, in the outer periphery of the housing body 11, a secondary inlet port 16 as one of the input ports Pa is formed in the vicinity of the bottom wall 13, and a secondary outlet port 17 as one of the discharge ports Pb is formed (see FIG. 1). The fluid from the secondary inlet port 16 is supplied to the bottom passage 11T.

The housing A is integrally formed with a tubular main inlet passage 14L for supplying the fluid to the main inlet port 14, and a pair of tubular main outlet passages 15L for separately delivering the fluid from the pair of main outlet ports 15.

Similarly, the housing A is integrally formed with a tubular secondary inlet passage 16L for supplying the fluid to the secondary inlet port 16, and a tubular secondary outlet passage 17L for delivering the fluid from the secondary outlet port 17.

### [Rotor]

As illustrated in FIGS. 1 to 4, the rotor B includes the cylindrical rotor body 21 centered around the rotation axis X. The rotor body 21 is rotatably accommodated in the rotor housing space 11S of the housing body 11. On the top of the rotor body 21, the input shaft 22 is integrally formed coaxially with the rotation axis X. A fitting portion 22a having a polygonal cross-sectional shape is formed on the protruding side of the input shaft 22 (the side opposite to the rotor body 21).

In the outer periphery of the rotor body 21, a main inlet 23 and a secondary outlet 24 are formed. The internal passage L connecting them is formed inside the rotor body 21.

Thus, in the valve apparatus V, as the rotor body 21 rotates around the rotation axis X, the secondary outlet 24 overlaps one of the pair of main outlet ports 15 to deliver the fluid. At this time, the flow rate of the fluid delivered changes with a change in the amount of overlap between the secondary outlet 24 and the main outlet port 15. The main inlet 23 of the rotor body 21 is maintained in a state of coinciding with part of the main inlet port 14 of the housing body 11 in a situation where the rotor B rotates in the region illustrated in FIGS. 2 and 3.

In the rotor body 21, an inlet space 25 open downward is formed. The inlet space 25 communicates with the bottom passage 11T. An auxiliary outlet 26 communicating with the inlet space 25 is formed in the outer periphery of the rotor body 21.

Thus, in the valve apparatus V, as the rotor body 21 rotates around the rotation axis X, the auxiliary outlet 26 overlaps the secondary outlet port 17 of the housing body 11 to deliver the fluid. At this time, the flow rate of the fluid delivered changes with a change in the amount of overlap between the auxiliary outlet 26 and the secondary outlet port 17.

The valve apparatus V enables switching of the flow of the fluid from the main inlet port 14 to one of the pair of main outlet ports 15 to the other with the rotational position of the rotor B. According to the timing of this switching (the rotational position of the rotor B), the timing to start the supply of the fluid from the secondary inlet port 16 to the secondary outlet port 17 is determined. Specifically, when the rotor B is in the position illustrated in FIG. 2, the fluid is not discharged from the secondary outlet port 17. When the rotor B is in the position illustrated in FIG. 3, the fluid is discharged from the secondary outlet port 17.

Note that in the valve apparatus V, the timing of switching the fluid from the main inlet port 14 to one of the pair of main outlet ports 15 and the timing of controlling the fluid to be supplied from the secondary inlet port 16 to the secondary outlet port 17 are not limited to the settings as illustrated in FIGS. 2 and 3.

### [Cross-sectional shapes of ports and outlets]

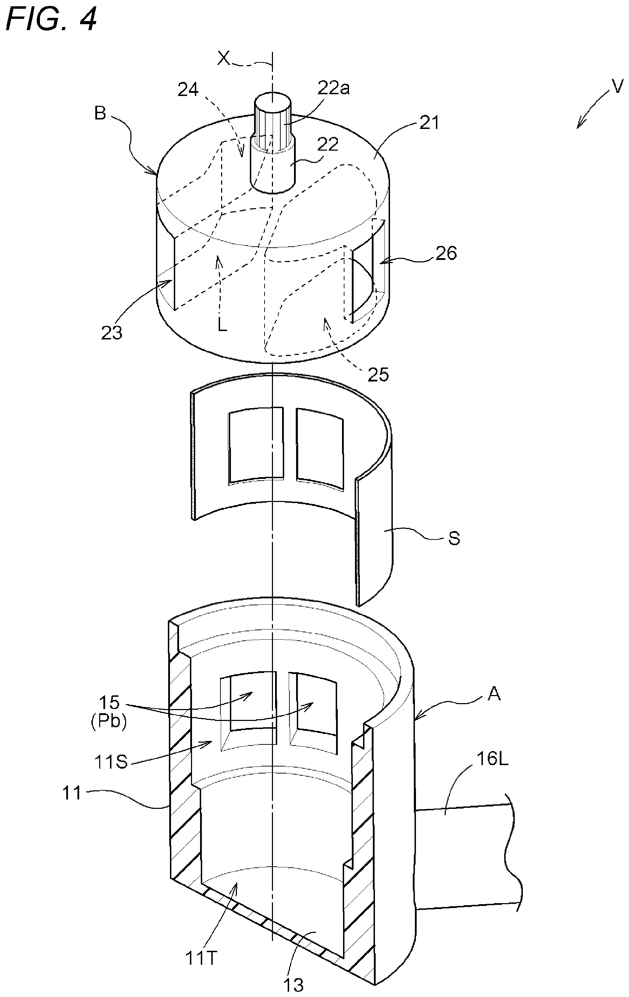

As illustrated in FIG. 4, the shape of the openings of the pair of main outlet ports 15 in the housing body 11 is a rectangle with four sides, and its two opposite sides are set in positions parallel to the rotation axis X. Correspondingly, the secondary outlet 24 of the rotor B is similarly in a rectangular shape with four sides, and its two opposite sides are set in positions parallel to the rotation axis X. The main outlet ports 15 and the secondary outlet 24 are in positional relationships that allow proper control to change the flow rate of the fluid when the rotation angle of the rotor B changes.

Further, the shape of the opening of the secondary outlet port 17 in the housing body 11 and the shape of the opening of the auxiliary outlet 26 in the rotor B are also a rectangle with four sides like the secondary outlet 24, and its two opposite sides are set in positions parallel to the rotation axis X. The secondary outlet port 17 and the auxiliary outlet 26 are in a positional relationship that allows proper control to change the flow rate of the fluid when the rotation angle of the rotor B changes.

As described above, the ports formed in the housing body 11 and the outlets formed in the rotor B are formed in a rectangular shape, and thus allow the flow rate of the fluid to be controlled to the amount proportional to the rotation angle when the rotor B rotates.

### [Electric motor and control unit]

The electric motor C has a rotary actuation unit (not illustrated) and a speed reduction unit that reduces a driving force (not illustrated) housed in a motor case 31, and outputs a rotational driving force to the output shaft 32.

The output shaft 32 is made of metal and has a protruding-side end portion in which a fitting hole is formed to be fitted to the fitting portion 22a on the protruding side of the input shaft 22.

The electric motor C uses, as the rotary actuation unit, a rotor brushless DC motor in which a motor with magnets is driven and rotated by the drive of field coils. The electric motor C of this configuration includes a Hall element to set the drive timing of the field coils, and can acquire the rotational speed of the motor rotor by acquiring a signal of the Hall element.

The electric motor C can acquire the rotation angle of the output shaft 32, based on the rotational speed acquired with the Hall element and the reduction ratio in the speed reduction unit.

As illustrated in FIGS. 1 and 6, the electric motor C is controlled by the control unit 40. The control unit 40 includes a target rotation angle acquisition unit 41, a twist amount acquisition unit 42, a correction unit 43, and a motor control unit 44.

For the control unit 40, part of the target rotation angle acquisition unit 41, the twist amount acquisition unit 42, the correction unit 43, and the motor control unit 44 can be configured by software. Therefore, the control unit 40 is composed of a microprocessor or a digital signal processor (DSP), nonvolatile memory, etc.

As illustrated in FIG. 5, where the rotation angle of the output shaft 22 in a situation where the input shaft 32 of the rotor B is twisted by the driving force of the electric motor C is represented as an output-side rotation angle Mr, the rotation angle of the input shaft 22 can be represented in a graph as an input-side rotation angle Vr.

In the graph, the horizontal axis represents time, and the vertical axis represents the rotation angle. On the vertical axis, the target rotation angle Rt represents the target rotation angle of the rotor B, and a corrected target rotation angle Rc represents the target rotation angle that has been corrected. The graph is drawn based on actual measured values.

### [Control mode]

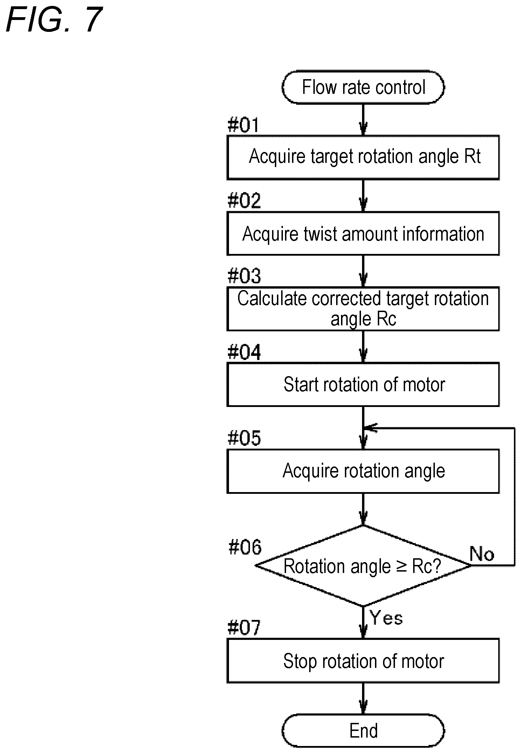

A control mode of the control unit 40 of the valve control device 1 is illustrated in a flowchart of FIG. 7. In the control unit 40, when the target rotation angle acquisition unit 41 acquires the target rotation angle Rt from an external system (e.g., an in-vehicle ECU), in relation to the acquisition, the correction unit 43 acquires twist amount information from the twist amount acquisition unit 42. Then, the correction unit 43 sets the corrected target rotation angle Rc, based on the target rotation angle Rt and the twist amount information (steps #01 to #03).

The twist amount acquisition unit 42 uses nonvolatile memory that stores a correction amount Rx measured in advance (an example of the twist amount information). The correction amount Rx is angle information corresponding to the rotation angle, and is the twist amount information on the rotor B (rotor body 21) with respect to the rotation angle of the output shaft 32, which has been obtained in advance by actual measurement. The correction amount Rx may be the median value of the twist amount actually measured according to the rotational torque of the electric motor C, or may be the median value of the twist amount actually measured according to the outside air temperature.

The correction unit 43 sets the corrected target rotation angle Rc by the calculation of adding the correction amount Rx to the target rotation angle Rt.

The corrected target rotation angle Rc is set in an extremely short time. Thereafter, the motor control unit 44 starts the rotation of the output shaft 32 of the electric motor C (step #04).

As described above, the input shaft 22 is twisted. Therefore, as illustrated in FIG. 5, the input shaft 22 is twisted by a predetermined amount after the start of the rotation of the output shaft 32 of the electric motor C, and the rotation of the rotor B (strictly, the rotor body 21) is started after a lapse of a delay time Tx.

As illustrated in the graph of FIG. 5, in a situation where the output shaft 32 of the electric motor C rotates and the rotation angle of the output shaft 32 increases, the rotation angle of the rotor B (rotor body 21) increases with delay.

The control unit 40 continues the driving of the electric motor C while acquiring the rotation angle of the output shaft 32 at short intervals until the rotation angle of the output shaft 32 reaches the corrected target rotation angle Rc, and stops the rotation of the electric motor C after the rotation angle of the output shaft 32 reaches the corrected target rotation angle Rc (steps #05 to #07). At this time, the rotation angle of the rotor B (rotor body 21) has reached the target rotation angle Rt.

That is, the difference between the output-side rotation angle Mr, which is the rotation angle of the output shaft 32, and the input-side rotation angle Vr, which is the rotation angle of the input shaft 22, is the correction amount Rx. Thus, a value obtained by adding the correction amount Rx (twist amount information) to the target rotation angle Rt is set as the corrected target rotation angle Rc so that the rotation angle of the output shaft 32 becomes the corrected target rotation angle Rc at the timing when the rotation angle of the rotor B (rotor body 21) reaches the target rotation angle Rt.

### [Functions and effects of the embodiment]

As described above, when the rotor B is rotated by the electric motor C, the correction unit 43 acquires the correction amount Rx (twist amount information) from the twist amount acquisition unit 42, and corrects the target rotation angle Rt acquired by the target rotation angle acquisition unit 41. That is, the correction unit 43 sets the corrected target rotation angle Rc by the calculation of adding the correction amount Rx to the target rotation angle Rt. Thereafter, the motor control unit 44 rotates the output shaft 32 to the rotation angle indicated by the set corrected target rotation angle Rc.

The reason for setting the corrected target rotation angle Rc in this manner is to eliminate the disadvantage that the input shaft 32 made of resin is twisted with the rotation of the output shaft 32 of the electric motor C, and this twist prevents the input shaft 22 of the rotor B from reaching the target rotation angle Rt (causes an insufficient amount of rotation) even when the output shaft 22 has reached the target rotation angle Rt.

In order to enable this control, the twist amount acquisition unit 42 stores the correction amount Rx as the twist amount information, and the correction unit 43 corrects the target rotation angle Rt based on the correction amount Rx to set the corrected target rotation angle Rc.

With the control to rotate the output shaft 32 to the corrected target rotation angle Rc, the rotation angle of the input shaft 22 has reached the target rotation angle Rt when the electric motor C stops. Consequently, even when the rotor B is rotated in the opposite direction by a twisting force acting on the input shaft 22 after the electric motor C has stopped, the rotation angle of the input shaft 22 of the rotor B is the target rotation angle Rt.

This configuration achieves the control without using a sensor such as a potentiometer to detect the rotation angle of the rotor B.

### [Another embodiment]

Other than the above-described embodiment, the present disclosure may be configured as described below (components having the same functions as those in the embodiment are denoted by the same numbers and reference numerals as those in the embodiment).

(a) In the control unit 40 of the valve control device 1, the twist amount acquisition unit 42 stores two types of twist amount information and switching time information. In a control mode, an apparatus including the control unit 40 performs flow rate control based on one of the two types of twist amount information from the timing of starting operation (start timing) until a predetermined switching time is reached, and performs flow rate control based on the other of the two types of twist amount information after the predetermined switching time is reached. Alternatively, the two types of twist amount information may be switched depending on whether the rotational torque of the electric motor C is less than or equal to a predetermined value or above the predetermined value.

As a specific example of using the control unit 40 of the other embodiment (a), the control unit 40 may control the valve apparatus V that supplies a coolant (an example of a fluid) to a radiator in an internal combustion engine. That is, the coolant is low immediately after the start of the internal combustion engine, and the temperature of the coolant rises after the start of the internal combustion engine.

Thus, in the case where it can be predicted that the amount of twist of the resin input shaft 22 will change as the temperature of the coolant rises over time, two types of twist information (the correction amount Rx) are stored, and a switching time is stored in advance. The twist information is switched based on a lapse of time from the start of the internal combustion engine to achieve highly accurate control of the rotor B.

In particular, the other embodiment (a), in which the control is switched based on time, thus eliminates the need to additionally use a temperature sensor, for example, by using time information of the ECU or using time information of another in-vehicle system. Note that the other embodiment (a) is not intended to control only a coolant of an internal combustion engine. In the case where the other embodiment (a) is applied to a device (e.g. a battery) including the valve apparatus V, the timing when the device starts can be set as the start timing.

(b) In the embodiment, the control unit 40 of the valve control device 1 performs control without acquiring temperature information and torque information. However, it is also possible to acquire temperature information and torque information, and change the mode of correction by the correction unit 43 based on the acquired information.

(c) The control unit 40 may be used to control a valve apparatus that does not use a rotary valve, such as a butterfly valve or a ball valve, as the valve body.

Note that the configuration disclosed in the above embodiments (including the other embodiment. The same applies hereinafter.) can be applied in combination with the configuration disclosed in the other embodiments as long as no contradictions arise. The embodiments disclosed in the present description are examples, and the embodiments of the present disclosure are not limited thereto, and can be modified as appropriate without departing from the object of the present disclosure.

In the above-described embodiments, the following configuration is conceived.

<1> A characteristic configuration of a valve control device (1) according to the present disclosure includes a valve apparatus (V) including a valve body (B) including an input shaft (22) made of resin, the valve body (B) being rotatable, an output shaft (32) that transmits a rotational force to the input shaft (22), and an actuator (C) that controls the flow rate of a fluid by rotation of the output shaft (32), and a control unit (40) that controls the operation of the actuator (C). The control unit (40) includes a target rotation angle acquisition unit (41) that acquires a target rotation angle (Rt) of the valve body (B), a twist amount acquisition unit (42) that acquires twist amount information indicating the amount of twist of the input shaft (22) with respect to the output shaft (32) caused when the valve body (B) is rotated by the actuator (C), and a correction unit (43) that sets a corrected target rotation angle (Rc) corrected with the twist amount information acquired by the twist amount acquisition unit (42), based on the target rotation angle (Rt) acquired by the target rotation angle acquisition unit (41). The control unit (40) controls the actuator (C) to rotate the output shaft (32) to a rotation angle indicated by the corrected target rotation angle (Rc) set by the correction unit (43).

According to this configuration, when the valve body (B) is rotated by the driving force of the actuator (C), the target rotation angle (Rt) is acquired by the target rotation angle acquisition unit (41), the twist amount information is acquired by the twist amount acquisition unit (42), the correction unit (43) sets the corrected target rotation angle (Rc) by correcting the target rotation angle (Rt) based on the twist amount information, and control to rotate the output shaft (32) to the rotation angle indicated by the set corrected target rotation angle (Rc) is performed.

That is, the input shaft (22) made of resin is twisted with the rotation of the output shaft (32) of the actuator (C), so that even when the output shaft (32) has reached the target rotation angle (Rt), the input shaft (22) has not reached the target rotation angle (Rt). For this reason, the target rotation angle (Rt) is corrected based on the twist amount information to set the corrected target rotation angle (Rc). Then, control to rotate the output shaft (32) to the corrected target rotation angle (Rc) is performed, so that the rotation angle of the input shaft (22) has reached the target rotation angle (Rt) when the actuator (C) stops. Therefore, even when the output shaft (32) is rotated in the opposite direction by a twisting force acting on the input shaft (22) after the actuator (C) has stopped, the rotation angle of the input shaft (22) remains at the target rotation angle (Rt). Thus, the valve control device (1) is configured to set the valve body (B) to the target rotation angle (Rt) with high accuracy by the control of the actuator (C) even when the input shaft (22) of the valve body (B) is made of resin.

<2> In the valve control device (1) in <1> described above, the valve apparatus (V) may be configured to accommodate the valve body (B) in a cylindrical housing (A) with a plurality of ports (Pa and Pb) formed in a through-hole shape, the valve body (B) may include an internal passage (L) that allows at least two of the plurality of ports (Pa and Pb) to communicate with each other according to the amount of rotation, and openings of the ports (Pa and Pb) and openings at ends of the internal passage (L) may be formed in a rectangular shape.

According to this, when the rotation axis (X) of the valve body (B) rotates, the amount of overlap between the openings of the ports (Pa and Pb) and the openings of the passages (14L, 15L, 16L, and 17L) in the valve body (B) changes, and the flow rate of the fluid changes accordingly. Since the individual openings are rectangular, the amount of overlap between the openings is proportional to the rotation angle of the valve body (B). As a result, the valve control device (1) can control the flow rate with high accuracy by controlling the rotation angle of the valve body (B).

<3> In the valve control device (1) in <1> or <2> described above, the correction unit (43) may set the corrected target rotation angle (Rc) without acquiring information on temperature around the valve apparatus (V) and torque information indicating torque acting on the output shaft (32) of the actuator (C).

According to this, since the rotation angle of the valve body (B) is controlled by the actuator (C) without the correction unit (43) using temperature information and torque information, highly accurate control can be achieved with a simple configuration.

<4> In the valve control device (1) in any one of <1> to <3> described above, the twist amount acquisition unit (42) may store two types of the twist amount information, and the correction unit (43) may switch between the two types of the twist information for use, based on time information relative to start timing.

According to this, even if there is an environmental temperature change that affects the amount of twist of the input shaft (22), as in the case of using the valve apparatus (V) in an environment where the temperature of the fluid increases over time from the start of use of the valve apparatus (V), highly accurate control can be achieved by switching between the two types of the twist amount information for use.

<5> In the valve control device (1) in any one of <1> to <4> described above, the valve body (B) may constitute a rotary valve.

According to this, even in the valve apparatus (V) in which the valve body (B) is a rotary valve, the rotary valve can be set to the target rotation angle (Rt) with high accuracy.

### INDUSTRIAL APPLICABILITY

The present disclosure can be used as a valve control device.

### REFERENCE SIGNS LIST

1: Valve control device, 22: Input shaft, 32: Output shaft, 40: Control unit, 41: Target rotation angle acquisition unit, 42: Twist amount acquisition unit, 43: Correction unit, A: Housing, B: Rotor (valve body or rotary valve), C: Electric motor (actuator), L: Internal passage, Pa: Input port (port), Pb: Output port (port), Rt: Target rotation angle, Rc: Corrected target rotation angle, Rx: Correction amount (twist amount information), and V: Valve apparatus

## Claims

1. A valve control device comprising:
a valve apparatus including
a valve body including an input shaft made of resin, the valve body being rotatable,
an output shaft that transmits a rotational force to the input shaft, and
an actuator that controls a flow rate of a fluid by rotation of the output shaft; and
a control unit that controls operation of the actuator,
the control unit including
a target rotation angle acquisition unit that acquires a target rotation angle of the valve body,
a twist amount acquisition unit that acquires twist amount information indicating an amount of twist of the input shaft with respect to the output shaft caused when the valve body is rotated by the actuator, and
a correction unit that sets a corrected target rotation angle corrected with the twist amount information acquired by the twist amount acquisition unit, based on the target rotation angle acquired by the target rotation angle acquisition unit,
the control unit controlling the actuator to rotate the output shaft to a rotation angle indicated by the corrected target rotation angle set by the correction unit.

2. The valve control device according to claim 1, wherein
the valve apparatus is configured to accommodate the valve body in a cylindrical housing with a plurality of ports formed in a through-hole shape,
the valve body includes an internal passage that allows at least two of the plurality of ports to communicate with each other according to an amount of rotation, and
openings of the ports and openings at ends of the internal passage are formed in a rectangular shape.

3. The valve control device according to claim 1, wherein the correction unit sets the corrected target rotation angle without acquiring information on temperature around the valve apparatus and torque information indicating torque acting on the output shaft of the actuator.

4. The valve control device according to claim 1 or 2, wherein
the twist amount acquisition unit stores two types of the twist amount information, and
the correction unit switches between the two types of the twist information for use, based on time information relative to start timing.

5. The valve control device according to claim 1 or 2, wherein the valve body constitutes a rotary valve.
